# EUROPÄISCHE PATENTSCHRIFT

(11) **EP 2 834 767 B1**
(45) Veröffentlichungstag und Bekanntmachung des Hinweises auf die Patenterteilung: **24.04.2019**
(21) Anmeldenummer: 13805918.3
(22) Anmeldetag: 17.12.2013
(51) Int. Cl.: G06F 21/57, G06F 21/31, H04L 29/06

(54) **COMPUTERSYSTEM SOWIE VERFAHREN ZUM SICHEREN BOOTEN EINES COMPUTERSYSTEMS**
COMPUTER SYSTEM AND METHOD FOR SECURE BOOT OF A COMPUTER SYSTEM
SYSTÈME D'ORDINATEUR ET PROCÉDÉ POUR CHARGEMENT D'UN ORDINATEUR

(30) Priorität: 10.01.2013 DE 102013100230
(43) Veröffentlichungstag der Anmeldung: 11.02.2015
(73) Patentinhaber: Fujitsu Technology Solutions Intellectual Property GmbH, 80807 München (DE)
(72) Erfinder: WEGENER, Mario, 86399 Bobingen (DE)
(74) Vertreter: Epping - Hermann - Fischer
(86) Internationale Anmeldenummer: PCT/EP2013/076922
(87) Internationale Veröffentlichungsnummer: WO 2014/108280

(56) Entgegenhaltungen:
- WO-A1-2007/098642
- US-A- 5 610 981
- US-A- 5 960 084
- US-B1- 6 463 537

## Beschreibung

Die Erfindung betrifft ein Computersystem mit einer Sicherungseinrichtung, die dazu eingerichtet ist, Zugangsdaten zu empfangen, diese abzugleichen und das Computersystem zu booten, wenn der Abgleich erfolgreich war. Darüber hinaus betrifft die Erfindung zwei Verfahren zum Empfangen und Abgleichen von Zugangsdaten und Booten eines Computersystems.

Aus dem Stand der Technik sind Computersysteme bekannt, bei denen zum Booten das Einstecken einer gültigen Chipkarte nötig ist. Über ein Lesegerät können die Computersysteme aus der Chipkarte Daten auslesen, die einen Benutzer des Computersystems ausweisen. Zusätzlich ist es möglich, ein Passwort abzufragen, das dem Benutzer der Chipkarte zugeordnet ist. Durch die Verwendung einer mechanischen Komponente mit Zugangsdaten kann eine hohe Sicherheit gewährleistet werden. Soll das Computersystem hingegen ohne Chipkarte gebootet werden, kommt es zu unverhältnismäßig hohen Sicherheitsdefiziten.

Die WO 2007/098642 beschreibt einen Mechanismus zur Zugriffskontrolle eines Computersystems in einem Pre-OS-Zustand. Es wird ein System beschrieben, das einem Eigentümer des Systems erlaubt, eine Zugangskontrolle zu dem System zu sperren. Das System umfasst eine Pre-OS-Umgebung, um eine Benutzerüberprüfung für das System durchzuführen. Des Weiteren umfasst das System eine Bootumgebung, um die Pre-OS-Umgebung zu laden. Hierzu wird die Authentizität der Pre-OS-Umgebung geprüft. Ist die Authentizität bestätigt, wird das System gebootet.

Das Patent US 5,960,084 lehrt ein sicheres Verfahren zum Aktivieren bzw. Deaktivieren von Leistung eines Computersystems, was auf einer zweiteiligen Benutzerverifikation basiert. In dem Verfahren wird ein zweiteiliger Authentifizierungsprozess benötigt, in dem die Anwesenheit von einem Benutzerpasswort und einem externen Token notwendig sind, um ein Systempasswort zu generieren. Das generierte Systempasswort wird mit anschließend mit einem Wert in einem sicheren Speicherbereich verglichen, um das Computersystem freizuschalten.

Aus dem Patent US 5,610,981 ist ein Sicherheitssystem bekannt, das vor einem Booten ansetzt und Potential hat, Eingriffe abzuwehren. Hierbei wird über einen Kartenleser eine Benutzerkarte verifiziert. Zusätzlich wird zur Verifikation ein Bootspeicher benutzt

Aufgabe der vorliegenden Erfindung ist es, ein Computersystem und Verfahren zu beschreiben, die Sicherheitslücken beim Betrieb eines derartigen Computersystems schließen.

Gemäß einem ersten Aspekt der Erfindung wird ein Computersystem beschrieben, das einen Datennetzwerkanschluss, ein Lesegerät, eine Eingabekomponente und eine Sicherungseinrichtung aufweist. Die Sicherungseinrichtung ist dazu eingerichtet, beim Start des Computersystems über den Datennetzwerkanschluss eine Datennetzwerkverbindung aufzubauen und Zugangsdaten wahlweise über die Datennetzwerkverbindung oder über das Lesegerät und die Eingabekomponente zu empfangen. Weiter ist die Sicherungseinrichtung dazu eingerichtet, die empfangenen Zugangsdaten mit einem in einer Firmware auf einem Speicherbaustein hinterlegten Datensatz abzugleichen und das Computersystem zu booten, wenn der Abgleich erfolgreich war.

Ein Vorteil hierbei ist es, dass die Sicherungseinrichtung eine Datennetzwerkverbindung aufbaut, bevor das Computersystem gestartet wird. Hierdurch ist es möglich, die Zugangsdaten nicht nur über das Lesegerät (beispielsweise zum Auslesen einer Chipkarte) und die Eingabekomponente (beispielsweise eine Tastatur) zu empfangen, sondern auch über die Datennetzwerkverbindung. Dies spielt besonders dann eine Rolle, wenn ein Benutzer einen Fehler bei der Eingabe der über die Eingabekomponente empfangenen Zugangsdaten macht oder der Empfang der Zugangsdaten über das Lesegerät unvollständig ist. In einem solchen Fall kann eine dritte Instanz, zum Beispiel ein Administrator, über die Datennetzwerkverbindung Zugangsdaten übermitteln und das Computersystem booten.

In einer vorteilhaften Ausgestaltung ist die Sicherungseinrichtung dazu eingerichtet, das Empfangen und Abgleich der Zugangsdaten bei einem fehlerhaften Abgleich für eine vorbestimmte Anzahl zu wiederholen und die vorbestimmte Anzahl über das Lesegerät aus einer Chipkarte auszulesen.

Dadurch, dass das Empfangen und Abgleichen der Zugangsdaten wiederholt stattfinden kann, können Fehler, zum Beispiel bei der Eingabe eines Passworts, korrigiert werden. Hierbei kann die Anzahl der Wiederholungen, die eine Falscheingabe oder ein falsches Erkennen von Zugangsdaten erlauben, über die Chipkarte ausgelesen werden.

In einer vorteilhaften Ausgestaltung ist die Sicherungseinrichtung dazu eingerichtet, nach Erreichen der vorbestimmten Anzahl wiederholter Abgleiche der Zugangsdaten, die über das Lesegerät oder die Datennetzwerkverbindung empfangenen Zugangsdaten zu sperren und die über die Eingabekomponente empfangenen Zugangsdaten zu löschen. Des Weiteren ist die Sicherungseinrichtung dazu eingerichtet, von den Zugangsdaten abhängige Kontrolldaten wahlweise über die Eingabekomponente oder die Datennetzwerkverbindung zu empfangen, die Kontrolldaten mit einem in der Firmware auf einem Speicherbaustein hinterlegten Datensatz abzugleichen und nach erfolgreichem Abgleich der Kontrolldaten die gesperrten Zugangsdaten zu entsperren und die gelöschten Zugangsdaten neu zu generieren.

Ein Vorteil dieser Ausgestaltung ist es, dass selbst bei einer wiederholten Fehleingabe von Zugangsdaten das Computersystem nicht endgültig gesperrt wird, sondern dass immer noch die Möglichkeit besteht, das Computersystem freizuschalten. Durch das Empfangen der Kontrolldaten über die Eingabekomponente oder die Datennetzwerkverbindung kann das Computersystem nicht nur von einem Benutzer an dem Computersystem, sondern auch von einem Benutzer, zum Beispiel einem Administrator, von einem entfernten Ort aus entsperrt werden.

In einer vorteilhaften Ausgestaltung ist die Sicherungseinrichtung des Computersystems dazu eingerichtet, einen Sicherheitsschlüssel einer Chipkarte über das Lesegerät und eine alphanumerische Zeichenfolge über die Eingabekomponente als Zugangsdaten zu empfangen oder eine auf den beiden über das Lesegerät und die Eingabekomponente empfangenen Daten basierende Kombination über die Datennetzwerkverbindung als Zugangsdaten zu empfangen.

Dadurch, dass die Kombination der Zugangsdaten die beiden anderen Zugangsdaten simuliert, ist es ausreichend, einen Datensatz zu übermitteln, anstatt auf eine weitere Eingabe warten zu müssen.

In einer vorteilhaften Ausgestaltung ist die Sicherungseinrichtung dazu eingerichtet, nach einem erfolgreichen Abgleich von über die Datennetzwerkverbindung empfangenen Zugangsdaten ein mehrmalig aufeinanderfolgendes Booten des Computersystems zu gewähren, ohne erneut Zugangsdaten zu empfangen, wobei die Anzahl der Bootvorgänge quantitativ oder zeitlich begrenzt ist.

Hat ein Benutzer eines Computersystems seine Zugangskarte zu dem Computersystem nicht parat, und kann somit das Computersystem nicht ordnungsgemäß booten, kann er anfordern, dass über eine Datennetzwerkverbindung ein Zugangscode an das Computersystem geschickt wird, der das Computersystem freischaltet und bootet. Im Verlauf des Arbeitstages kann es nun dazu kommen, dass das Computersystem erneut gebootet werden muss. Nun müsste der Benutzer wieder den Vorgang wiederholen. Ein Vorteil der Ausgestaltung ist es, dass der Benutzer nach einem Anfordern eines Freischaltungscodes das Computersystem beliebig herunterfahren und booten kann, solange dies innerhalb der begrenzten Anzahl geschieht.

In einer vorteilhaften Ausgestaltung ist das Computersystem dadurch gekennzeichnet, dass die über die Datennetzwerkverbindung empfangenen Daten verschlüsselt sind. Des Weiteren ist die Sicherungseinrichtung dazu eingerichtet, die empfangenen Daten zu entschlüsseln. Hierdurch ist sichergestellt, dass Dritte nicht auf die übertragenen Daten zugreifen können.

Gemäß einem zweiten Aspekt beschreibt die Erfindung ein Verfahren für ein Computersystem mit einem Datennetzwerkanschluss, einem Lesegerät und einer Eingabekomponente umfassend die Schritte:
- Aufbau einer Datennetzwerkverbindung über den Datennetzwerkanschluss, wenn das Computersystem gestartet wird,
- Empfangen von Zugangsdaten wahlweise über die Datennetzwerkverbindung oder über das Lesegerät und die Eingabekomponente,
- Abgleichen der empfangenen Zugangsdaten mit einem in einer Firmware auf einem Speicherbaustein hinterlegten Datensatz, und
- Booten des Computersystems, wenn der Abgleich erfolgreich war.

Vorteilhaft an dem Verfahren ist es, dass als erstes eine Datennetzwerkverbindung aufgebaut wird, was es ermöglicht, die Zugangsdaten auch über die Datennetzwerkverbindung zu empfangen. Hierdurch ist man nicht darauf angewiesen, einem Benutzer alle system- bzw. sicherheitsrelevanten Informationen zukommen zu lassen.

Gemäß einer vorteilhaften Ausgestaltung ist das Verfahren dadurch gekennzeichnet, dass die Schritte des Empfangens und des Abgleichens bei einem fehlerhaften Abgleich für eine vorbestimmte Anzahl wiederholt werden. Gemäß der vorteilhaften Ausgestaltung wird zusätzlich der Schritt ausgeführt:
- Auslesen der vorbestimmten Anzahl von Wiederholungen der Schritte des Empfangens und des Abgleichens über das Lesegerät aus einer Chipkarte.

Gemäß einer weiteren vorteilhaften Ausgestaltung des Verfahrens wird der Schritt des Bootens nach einem erfolgreichen Abgleich von über die Datennetzwerkverbindung empfangenen Zugangsdaten mehrmals aufeinanderfolgend ausgeführt, ohne erneut die Schritte des Empfangens und Abgleichens auszuführen, wobei die Anzahl der Wiederholungen quantitativ oder zeitlich begrenzt ist.

Bezüglich der Vorteile dieser Ausgestaltung wird auf die oben genannten Vorteile der vorteilhaften Ausgestaltung des Computersystems mit den gleichen Merkmalen verwiesen.

Gemäß einer weiteren vorteilhaften Ausgestaltung des Verfahrens wird im Schritt des Empfangens von Zugangsdaten wahlweise ein Sicherheitsschlüssel über das Lesegerät aus einer Chipkarte und eine alphanumerische Zeichenfolge über die Eingabekomponente oder eine auf dem Sicherheitsschlüssel und der Zeichenfolge basierende Kombination über die Datennetzwerkverbindung als Zugangsdaten empfangen.

Gemäß einem dritten Aspekt der Erfindung wird ein Verfahren für ein Computersystem, umfassend einen Datennetzwerkanschluss, ein Lesegerät und eine Eingabekomponente beschrieben. Das Verfahren umfasst die Schritte:
- Aufbauen einer Datennetzwerkverbindung über den Datennetzwerkanschluss, wenn das Computersystem gestartet wird,
- wiederholtes Empfangen von Zugangsdaten wahlweise über die Datennetzwerkverbindung oder über das Lesegerät und die Eingabekomponente und Abgleichen mit einem in einer Firmware auf einem Speicherbaustein hinterlegten Datensatz, bis das Abgleichen erfolgreich war oder eine vorbestimmte Anzahl Wiederholungen erreicht wurde,
- Sperren der Zugangsdaten, wenn die vorbestimmte Anzahl im Schritt des wiederholten Empfangens und Abgleichens von Zugangsdaten erreicht wurde oder Booten des Computersystems, wenn der Abgleich der Zugangsdaten erfolgreich war, und
- Abgleichen von über die Datennetzwerkverbindung oder die Eingabekomponente empfangenen Kontrolldaten, wenn die Zugangsdaten gesperrt wurden und Entsperren der gesperrten Zugangsdaten, wenn der Abgleich der Kontrolldaten erfolgreich war.

Die Vorteile dieses Verfahrens treten dann zutage, wenn ein Benutzer eine mehrfache Falscheingabe seiner Zugangsdaten gemacht hat. Dadurch, dass noch vor einem Empfangen und Abgleichen von Zugangsdaten eine Datennetzwerkverbindung aufgebaut wird, ist es möglich, Kontrolldaten ebenso wie durch eine direkte Eingabe über die Datennetzwerkverbindung zu empfangen. Somit muss der Benutzer nicht im Besitz der Kontrolldaten sein. Diese können von beispielsweise einem Administrator aus der Ferne eingegeben werden.

Gemäß einer vorteilhaften Ausgestaltung ist das Verfahren dadurch gekennzeichnet, dass im Schritt des Abgleichens von Kontrolldaten eine alphanumerische Zeichenfolge als Kontrolldaten empfangen wird.

Gemäß einer weiteren vorteilhaften Ausgestaltung beider Verfahren werden zusätzlich folgende Schritte ausgeführt:
- Verschlüsseln von Daten, bevor die Daten über die Datennetzwerkverbindung gesendet werden, und
- Entschlüsseln der verschlüsselten Daten, die über die Datennetzwerkverbindung empfangen wurden.

In einer vorteilhaften Ausgestaltung ist das zweite Verfahren dadurch gekennzeichnet, dass im Schritt des Sperrens der Zugangsdaten zusätzlich die über die Eingabekomponente empfangenen Zugangsdaten gelöscht werden und im Schritt des Abgleichens der Kontrolldaten die gelöschten Zugangsdaten neu generiert werden, wenn der Abgleich erfolgreich war.

Die Erfindung wird nachfolgend anhand von unterschiedlichen Ausführungsbeispielen unter Bezugnahme auf die angehängten Figuren im Detail beschrieben. In den Figuren zeigen:
- Figur 1: ein Computersystem gemäß einer Ausgestaltung der Erfindung,
- Figur 2: ein Ablaufdiagramm eines ersten Verfahrens zum Booten eines Computersystems und
- Figur 3: ein Ablaufdiagramm eines zweiten Verfahrens zum Booten eines Computersystems.

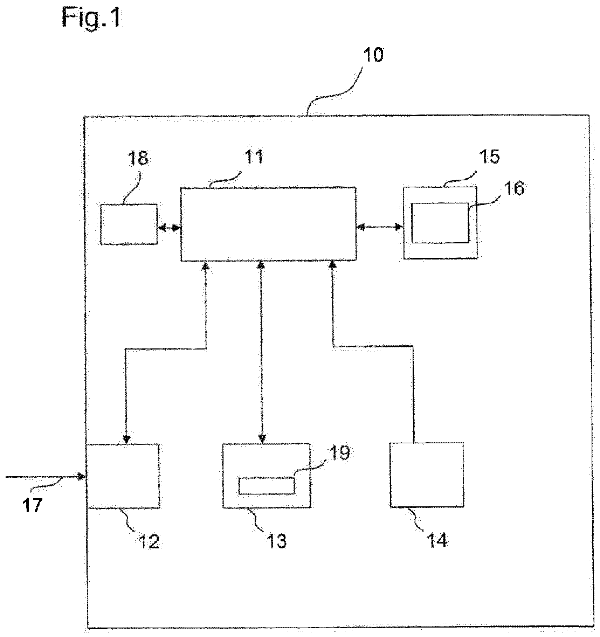

Figur 1 zeigt schematisch ein Computersystem 10 nach der Erfindung. In dem Computersystem 10 ist eine Sicherungseinrichtung 11 angeordnet. Diese kann ein hierfür vorgesehener Mikrocontroller oder auch in bestehende Hardware integriert sein. Die Sicherungseinrichtung 11 ist dafür vorgesehen, den unberechtigten Zugriff von Personen zu verhindern, die auf das Computersystem 10 zugreifen wollen. Um berechtigten Benutzern die Möglichkeit zu geben, sich zu authentifizieren, sind verschiedene Kontrollmechanismen vorgesehen. Die Sicherungsvorrichtung 11 ist verbunden mit einem Datennetzwerkanschluss 12, über den eine Datennetzwerkverbindung 17 zu beispielsweise einem Firmennetzwerk über ein sogenanntes Local Area Network, aufgebaut werden kann. Des Weiteren ist die Sicherungseinrichtung 11 verbunden mit einem Lesegerät 13, das zum Beispiel die Daten einer Chipkarte 19 auslesen kann. Die Sicherungseinrichtung 11 ist weiterhin angeschlossen an eine Eingabekomponente 14, im Ausführungsbeispiel eine Tastatur. Die Sicherungseinrichtung 11 ist dazu eingerichtet, von den drei Komponenten 12, 13 und 14 Zugangsdaten zu empfangen. Die Sicherungseinrichtung 11 ist weiterhin verbunden mit einem Speicherbaustein 15, in dem ein Datensatz 16 gespeichert ist. Der Datensatz 16 ist Teil einer Firmware und umfasst sicherheitsrelevante Daten, die zur Authentifizierung eines Benutzers nötig sind. Das Computersystem 10 weist einen Zähler 18 auf, der mit der Sicherungseinrichtung 11 verbunden ist.

Bei üblicher Benutzung des Computersystems 10 steckt ein Benutzer seine Chipkarte 19 in das Lesegerät 13 ein, startet das Computersystem 10 und bevor dieses bootet, zeigt die Sicherungseinrichtung 11 eine Eingabemaske an, über die der Benutzer mit Hilfe der Tastatur ein Passwort eingeben kann, zum Beispiel eine sogenannte "personal identification number" (PIN). Die Sicherungseinrichtung 11 ist dazu eingerichtet, den empfangenen Code, im Beispiel die PIN und die über das Lesegerät 13 empfangenen Daten der Chipkarte 19 mit dem Datensatz 16 aus dem Speicherbaustein 15 abzugleichen. Ist der Abgleich erfolgreich, schaltet die Sicherungseinrichtung 11 das Computersystem 10 frei und bootet es. Der Benutzer kann nun an seinem Arbeitsgerät arbeiten.

Will nun hingegen nicht der Benutzer, der die Chipkarte 19 besitzt, sondern ein Systemadministrator aus der Ferne auf das Computersystem 10 zugreifen, so wäre es umständlich, sich eine Chipkarte 19 zu beschaffen, zu dem Computersystem 10 zu gehen und die Chipkarte 19 zu benutzen. Stattdessen ist es praktischer, über eine Datennetzwerkverbindung 17 das Computersystem 10 zu starten. Da die Sicherungseinrichtung 11 allerdings dazu eingerichtet ist, nur Benutzer, die die Zugangsdaten einer Chipkarte 19 haben, für das Computersystem 10 zuzulassen, ist es nötig, dass der Administrator der Sicherungseinrichtung 11 derartige Daten zur Verfügung stellen kann. Hierfür kann der Administrator erfindungsgemäß einen Sicherheitsschlüssel über die Datennetzwerkverbindung 17 senden, der über den Datennetzwerkanschluss 12 mit der Sicherungseinrichtung 11 verbunden ist, um der Sicherungseinrichtung 11 eine Kombination der Zugangsdaten einer Chipkarte 19 und einer eingegebenen PIN zu simulieren. Diesen Sicherheitsschlüssel kann die Sicherungseinrichtung 11 genauso wie die Kombination der Zugangsdaten aus der Chipkarte 19 und der Eingabekomponente 14 mit dem Datensatz 16 in dem Speicherbaustein 15 abgleichen.

In einem alternativen Szenario hat der Benutzer seine Chipkarte 19 vergessen. Nun kann er einem Administrator Bescheid sagen, dass dieser über die Datennetzwerkverbindung 17 die Kombination der Zugangsdaten an die Sicherungseinrichtung 11 sendet und das Computersystem 10 somit freischaltet. Auch hierfür ist es notwendig, dass die Sicherungseinrichtung 11 schon vor dem Booten des Computersystems 10 über den Datennetzwerkanschluss 12 eine Datennetzwerkverbindung 17 aufgebaut hat.

Im Ausführungsbeispiel ist die Sicherungseinrichtung 11 dazu eingerichtet, die Zugangsdaten mehrfach abzugleichen, wenn ein Abgleich fehlerhaft war. Steckt zum Beispiel der Benutzer seine Chipkarte 19 in das Lesegerät 13, gibt aber anschließend über die Eingabekomponente 14 eine fehlerhafte PIN ein, so erkennt dies die Sicherungseinrichtung 11 und gibt dem Benutzer eine weitere Möglichkeit, die zu der Chipkarte 19 gehörende PIN über die Eingabekomponente 14 einzugeben. Im beschriebenen Ausführungsbeispiel liest die Sicherungseinrichtung 11 hierfür die vorbestimmte maximale Anzahl der Wiederholungen, die die Sicherungseinrichtung 11 dem Benutzer zur Verfügung stellt, über das Lesegerät 13 aus der Chipkarte 19 aus und erhöht den Wert des Zählers 18, um die Anzahl der Wiederholungen zu zählen. Somit kann individuell auf jeder Chipkarte 19 festgelegt werden, wie oft ein Benutzer seine Passworteingabe wiederholen darf.

Die Sicherungseinrichtung 11 ist dazu eingerichtet, die Zugangsdaten, die aus der Chipkarte 19 über das Lesegerät 13 ausgelesen wurden, beziehungsweise die Zugangsdaten, die über die Datennetzwerkverbindung 17 empfangen wurden, zu sperren und die Zugangsdaten, die über die Eingabekomponente 14 empfangen wurden, im Beispiel die PIN, zu löschen, wenn die Anzahl erlaubter Wiederholungen überschritten wurde. Durch das Sperren beziehungsweise Löschen der Zugangsdaten wird einem Benutzer die Möglichkeit verwehrt, das Computersystem 10 zu booten. Dies ist beispielsweise dann sinnvoll, wenn ein unberechtigter Benutzer durch Versuche herausfinden will, welches Passwort das korrekte ist. Will nun jedoch der rechtmäßige Benutzer wieder an dem Computersystem 10 arbeiten, so kann er durch Eingabe von Kontrolldaten, zum Beispiel eines Personal Unlock Keys (PUK), seine Zugangsdaten wieder herstellen. Diesen PUK kann er zum Beispiel über die Eingabekomponente 14 eingeben. Um den PUK zu erfahren, muss er zuvor telefonisch mit einem Administrator telefonieren und sich per Telefon den PUK mitteilen lassen. Dies kann dazu führen, dass eventuell ein falscher PUK übermittelt wird oder die Durchsage des Administrators falsch verstanden und ein fehlerhafter PUK eingegeben wird. Um dies zu vermeiden, ist es mit dem beschriebenen Computersystem 10 möglich, diesen PUK über die Datennetzwerkverbindung 17 zu empfangen. Somit kann der Administrator dem Benutzer direkt Zugriff auf das Computersystem 10 geben, ohne dass der Benutzer den PUK eingeben muss.

Im Ausführungsbeispiel ist die Sicherungseinrichtung 11 dazu eingerichtet, nach einem erfolgreichen Abgleich von über die Datennetzwerkverbindung 17 empfangenen Zugangsdaten ein mehrmaliges aufeinanderfolgendes Booten des Computersystems 11 zu gewähren, ohne erneut Zugangsdaten zu empfangen. Auf diese Weise kann ein Benutzer das Computersystem 10 auch dann mehrfach booten, wenn er seine Chipkarte 19 nicht parat hat und die Zugangsdaten über die Datennetzwerkverbindung 17 von einem Administrator anfordern musste. Die Anzahl der Bootvorgänge ist quantitativ oder zeitlich begrenzt, so dass der Benutzer beispielsweise Zugang für einen Tag oder 5 Bootvorgänge erhält.

Im Ausführungsbeispiel werden die Daten, die über die Datennetzwerkverbindung 17 gesendet werden, zuvor verschlüsselt und die Sicherungseinrichtung 11 ist dazu eingerichtet, die empfangenen Daten zu entschlüsseln. Dies gewährt ein hohes Maß an Sicherheit und es wird einem nichtberechtigten Benutzer erschwert, an korrekte Zugangsdaten zu kommen.

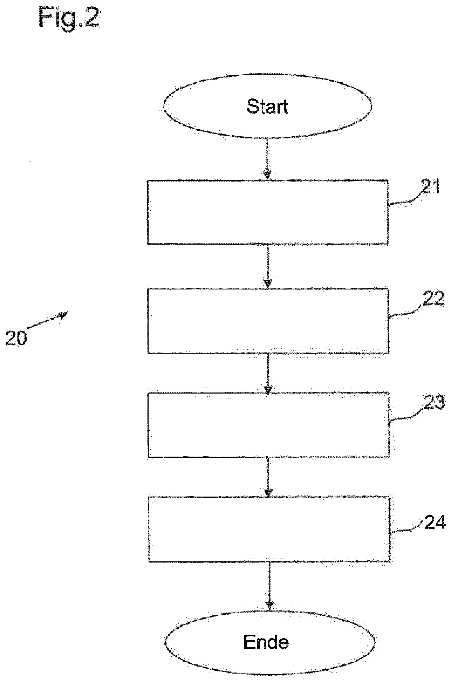

Das in Figur 2 dargestellte Ablaufdiagramm 20 zeigt erfindungsgemäß die Schritte eines Verfahrens zum Booten eines Computersystems 10. Wird das Computersystem 10 gestartet, so wird zuerst der Schritt 21 ausgeführt. In Schritt 21 baut die Sicherungseinrichtung 11 eine Datennetzwerkverbindung 17 über den Datennetzwerkanschluss 12 auf. Durch das Aufbauen der Datennetzwerkverbindung 17 noch bevor das Computersystem 10 gebootet wird, können schon zum Empfangen und Abgleichen der Zugangsdaten Zugangsdaten von einer externen Quelle empfangen werden. Im Schritt 22 werden nun Zugangsdaten entweder über ein Lesegerät 13 aus einer Chipkarte 19 ausgelesen und über die Eingabekomponente 14 empfangen oder die Zugangsdaten werden über die Datennetzwerkverbindung 17 an den Datennetzwerkanschluss 12 geschickt und über diesen von der Sicherungseinrichtung 11 empfangen.

Im Schritt 23 werden die Zugangsdaten, die im Schritt 22 empfangen wurden, von der Sicherungseinrichtung 11 mit einem in dem Speicherbaustein 15 hinterlegten Datensatz 16 abgeglichen. Hierbei ist es irrelevant, ob die in Schritt 22 empfangenen Zugangsdaten über die Datennetzwerkverbindung 17 oder die Eingabekomponente 14 und das Lesegerät 13 empfangen wurden. Ist der Abgleich der Zugangsdaten erfolgreich, so wird in Schritt 24 das Computersystem 10 gebootet.

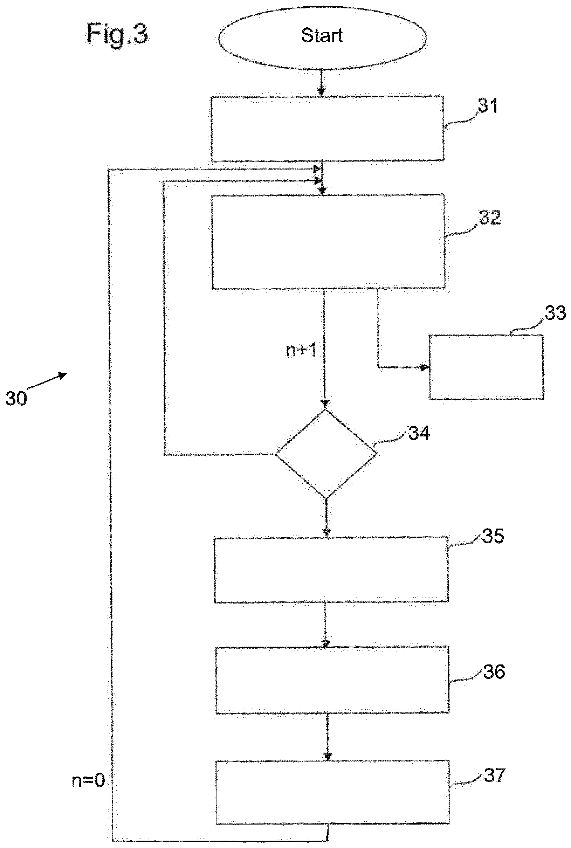

Figur 3 zeigt ein Ablaufdiagramm 30 zum Booten des Computersystems 10. Wird das Computersystem 10 gestartet, wird zuerst der Schritt 31 ausgeführt, wobei die Sicherungseinrichtung 11 eine Datennetzwerkverbindung 17 über den Datennetzwerkanschluss 12 aufbaut. In Schritt 32 empfängt die Sicherungseinrichtung 11 Zugangsdaten und gleicht diese Zugangsdaten mit einem Datensatz 16 in einem Speicherbaustein 15 ab. Ist der Abgleich erfolgreich, so ist der Benutzer berechtigt, das Computersystem zu benutzen und das Computersystem 10 wird in Schritt 33 gebootet. War der Abgleich der Zugangsdaten hingegen fehlerhaft, so wird ein Zähler 18 aktiviert, und der Zählerwert n des Zählers 18 um 1 erhöht. In der Abfrage 34 wird nun überprüft, ob der Zählerwert n des Zählers 18 einem vorbestimmten Wert entspricht. Ist dies nicht der Fall, so hat der Benutzer eine weitere Möglichkeit, in Schritt 32 die Zugangsdaten einzugeben und einen Abgleich über die Sicherungseinrichtung 11 zu starten. Ist der Abgleich nun erfolgreich, kann das System in Schritt 33 booten. Ist der Abgleich hingegen erneut fehlerhaft, so wird der Zählerwert n des Zählers 18 um 1 erhöht und es findet erneut die Abfrage in Schritt 34 statt, ob der Zählerwert n des Zählers 18 den vorbestimmten Wert erreicht hat. Der vorbestimmte Wert für die maximale Wiederholung dieses Vorgangs ist im Ausführungsbeispiel auf der Chipkarte 19 gespeichert.

Wird der Wert, beispielsweise 4, erreicht, so wurde das Passwort zu oft falsch eingegeben, und die Zugangsdaten werden im Schritt 35 gesperrt.

Um nun das System erneut freischalten zu können, werden in Schritt 36 Kontrolldaten empfangen und abgeglichen. Hierbei ist es nun möglich, die Kontrolldaten in Form eines PUK über die Eingabekomponente 14 oder die Datennetzwerkverbindung 17 einzugeben. Ist der Abgleich der Kontrolldaten erfolgreich, so werden die Zugangsdaten in Schritt 37 entsperrt. Im Anschluss an Schritt 37 wird der Zählerwert n des Zählers 18 zurückgesetzt und der Benutzer kann erneut in Schritt 32 seine Zugangsdaten eingeben.

In einem nichtdargestellten Ausführungsbeispiel wird in Schritt 35, dem Sperren der Zugangsdaten, zusätzlich die vom Benutzer einzugebende PIN, die über die Eingabekomponente 14 empfangen wird, gelöscht. Entsprechend werden in Schritt 37, dem Entsperren der Zugangsdaten zusätzlich die Zugangsdaten, die über die Eingabekomponente 14 empfangen wurden neu generiert.

In den Ausführungsbeispielen sind alle Daten, die über die Eingabekomponente 14 eingegeben werden können, alphanumerische Zeichenfolgen. Diese Daten werden entweder über die Eingabekomponente 14 selbst eingegeben, oder aber über die Datennetzwerkverbindung 17 übermittelt.

In einem nicht dargestellten Ausführungsbeispiel umfassen die Verfahren zusätzlich zu den genannten Schritten noch den Schritt des Verschlüsselns von Daten, bevor diese Daten über die Datennetzwerkverbindung 17 gesendet werden. Dementsprechend umfassen die Verfahren ebenso einen Schritt des Entschlüsselns der verschlüsselten Daten.

### Bezugszeichenliste

- 10: Computersystem
- 11: Sicherungseinrichtung
- 12: Datennetzwerkanschluss
- 13: Lesegerät
- 14: Eingabekomponente
- 15: Speicherbaustein
- 16: Datensatz
- 17: Datennetzwerkverbindung
- 18: Zähler
- 19: Chipkarte
- 20, 30: Ablaufdiagramme
- 21 bis 24: Verfahrensschritte
- 31 bis 37: Verfahrensschritte
- n: Zählerwert

## Patentansprüche

1. Computersystem (10) mit einem Datennetzwerkanschluss (12), einem Lesegerät (13), einer Eingabekomponente (14) und einer Sicherungseinrichtung (11), wobei die Sicherungseinrichtung (11) dazu eingerichtet ist, beim Start des Computersystems (10) über den Datennetzwerkanschluss (12) eine Datennetzwerkverbindung (17) aufzubauen, Zugangsdaten wahlweise über die Datennetzwerkverbindung (17) oder über das Lesegerät (13) und die Eingabekomponente (14) zu empfangen, mit einem in einer Firmware auf einem Speicherbaustein (15) hinterlegten Datensatz (16) abzugleichen und das Computersystem (10) zu booten, wenn der Abgleich erfolgreich war.

2. Computersystem (10) nach Anspruch 1, **dadurch gekennzeichnet, dass** die Sicherungseinrichtung (11) dazu eingerichtet ist, das Empfangen und den Abgleich der Zugangsdaten bei einem fehlerhaften Abgleich für eine vorbestimmte Anzahl zu wiederholen und die vorbestimmte Anzahl über das Lesegerät (13) aus einer Chipkarte (19) auszulesen.

3. Computersystem (10) nach Anspruch 2, **dadurch gekennzeichnet, dass** die Sicherungseinrichtung (11) dazu eingerichtet ist, nach Erreichen der vorbestimmten Anzahl wiederholter Abgleiche der Zugangsdaten, die über das Lesegerät (13) oder die Datennetzwerkverbindung (17) empfangenen Zugangsdaten zu sperren und die über die Eingabekomponente (14) empfangenen Zugangsdaten zu löschen, von den Zugangsdaten abhängige Kontrolldaten wahlweise über die Eingabekomponente (14) oder die Datennetzwerkverbindung (17) zu empfangen, die Kontrolldaten mit einem in der Firmware auf einem Speicherbaustein (15) hinterlegten Datensatz (16) abzugleichen und nach erfolgreichem Abgleich der Kontrolldaten die gesperrten Zugangsdaten zu entsperren und die gelöschten Zugangsdaten neu zu generieren.

4. Computersystem (10) nach einem der Ansprüche 1 bis 3, **dadurch gekennzeichnet, dass** die Sicherungseinrichtung (11) dazu eingerichtet ist, einen Sicherheitsschlüssel einer Chipkarte (19) über das Lesegerät (13) und eine alphanumerische Zeichenfolge über die Eingabekomponente (14) als Zugangsdaten zu empfangen oder eine auf den beiden über das Lesegerät (13) und die Eingabekomponente (14) empfangenen Daten basierende Kombination über die Datennetzwerkverbindung (17) als Zugangsdaten zu empfangen.

5. Computersystem (10) nach einem der Ansprüche 1 bis 4, **dadurch gekennzeichnet, dass** die Sicherungseinrichtung (11) dazu eingerichtet ist, nach einem erfolgreichen Abgleich von über die Datennetzwerkverbindung (17) empfangenen Zugangsdaten ein mehrmalig aufeinanderfolgendes Booten des Computersystems (10) zu gewähren, ohne erneut Zugangsdaten zu empfangen, wobei die Anzahl der Bootvorgänge quantitativ oder zeitlich begrenzt ist.

6. Computersystem (10) nach einem der Ansprüche 1 bis 5, **dadurch gekennzeichnet, dass** die über die Datennetzwerkverbindung (17) empfangenen Daten verschlüsselt sind und die Sicherungseinrichtung (11) dazu eingerichtet ist, die empfangenen Daten zu entschlüsseln.

7. Verfahren für ein Computersystem (10), insbesondere ein Computersystem (10) nach einem der Ansprüche 1 bis 6, umfassend einen Datennetzwerkanschluss (12), ein Lesegerät (13) und eine Eingabekomponente (14), mit den Schritten:
- Aufbauen einer Datennetzwerkverbindung (17) über den Datennetzwerkanschluss (12), wenn das Computersystem (10) gestartet wird,
- Empfangen von Zugangsdaten wahlweise über die Datennetzwerkverbindung (17) oder über das Lesegerät (13) und die Eingabekomponente (14),
- Abgleichen der empfangenen Zugangsdaten mit einem in einer Firmware auf einem Speicherbaustein (15) hinterlegten Datensatz (16), und
- Booten des Computersystems (10), wenn der Abgleich erfolgreich war.

8. Verfahren nach Anspruch 7, **dadurch gekennzeichnet, dass** die Schritte des Empfangens und des Abgleichens bei einem fehlerhaften Abgleich für eine vorbestimmte Anzahl wiederholt werden und zusätzlich der Schritt
- Auslesen der vorbestimmten Anzahl von Wiederholungen der Schritte des Empfangens und des Abgleichens über das Lesegerät (13) aus einer Chipkarte (19) ausgeführt wird.

9. Verfahren nach einem der Ansprüche 7 oder 8, **dadurch gekennzeichnet, dass** der Schritt des Bootens nach einem erfolgreichen Abgleich von über die Datennetzwerkverbindung (17) empfangenen Zugangsdaten mehrmals aufeinanderfolgend ausgeführt werden kann, ohne erneut die Schritte des Empfangens und Abgleichens auszuführen, wobei die Anzahl der Wiederholungen quantitativ oder zeitlich begrenzt ist.

10. Verfahren nach einem der Ansprüche 7 bis 9, **dadurch gekennzeichnet, dass** im Schritt des Empfangens von Zugangsdaten wahlweise ein Sicherheitsschlüssel über das Lesegerät (13) aus einer Chipkarte (19) und eine alphanumerische Zeichenfolge über die Eingabekomponente (14) oder eine auf dem Sicherheitsschlüssel und der Zeichenfolge basierende Kombination über die Datennetzwerkverbindung (17) als Zugangsdaten empfangen werden.

11. Verfahren für ein Computersystem (10), insbesondere ein Computersystem (10) nach Anspruch 3, umfassend einen Datennetzwerkanschluss (12), ein Lesegerät (13) und eine Eingabekomponente (14), mit den Schritten:
- Aufbauen einer Datennetzwerkverbindung (17) über den Datennetzwerkanschluss (12), wenn das Computersystem (10) gestartet wird,
- wiederholtes Empfangen von Zugangsdaten wahlweise über die Datennetzwerkverbindung (17) oder über das Lesegerät (13) und die Eingabekomponente (14) und Abgleichen mit einem in einer Firmware auf einem Speicherbaustein (15) hinterlegten Datensatz (16), bis das Abgleichen erfolgreich war oder eine vorbestimmte Anzahl Wiederholungen erreicht wurde,
- Sperren der Zugangsdaten, wenn die vorbestimmte Anzahl im Schritt des wiederholten Empfangens und Abgleichens von Zugangsdaten erreicht wurde oder Booten des Computersystems (10), wenn der Abgleich der Zugangsdaten erfolgreich war, und
- Abgleichen von über die Datennetzwerkverbindung (17) oder die Eingabekomponente (14) empfangenen Kontrolldaten, wenn die Zugangsdaten gesperrt wurden und Entsperren der gesperrten Zugangsdaten, wenn der Abgleich der Kontrolldaten erfolgreich war.

12. Verfahren nach Anspruch 11, **dadurch gekennzeichnet, dass** im Schritt des Abgleichens von Kontrolldaten eine alphanumerische Zeichenfolge als Kontrolldaten empfangen wird.

13. Verfahren nach einem der Ansprüche 7 bis 12, **dadurch gekennzeichnet, dass** zusätzlich folgende Schritte ausgeführt werden:
- Verschlüsseln von Daten, bevor die Daten über die Datennetzwerkverbindung (17) gesendet werden, und
- Entschlüsseln der verschlüsselten Daten, die über die Datennetzwerkverbindung (17) empfangen wurden.

14. Verfahren nach einem der Ansprüche 11 bis 13, **dadurch gekennzeichnet, dass** im Schritt des Sperrens der Zugangsdaten zusätzlich die über die Eingabekomponente (14) empfangenen Zugangsdaten gelöscht werden und im Schritt des Abgleichens der Kontrolldaten die gelöschten Zugangsdaten neu generiert werden, wenn der Abgleich erfolgreich war.

## Claims

1. Computer system (10) with a data network port (12), a reading device (13), an input component (14) and a security unit (11), wherein the security unit (11) is configured to establish a data network connection (17) via the data network port (12) in the starting of the computer system (10), to receive access data selectively via the data network port (12) or via the reading device (13) and the input component (14), to cross-check said data with a data set (16) stored in a firmware on a memory module (15), and to boot the computer system if the cross-check was successful.

2. Computer system (10) according to claim 1, **characterized in that** the security unit (11) is configured to repeat the receiving and cross-checking of the access data in a faulty cross-check for a predetermined number of times, and to read the predetermined number, via the reading device (13), from a chip card (19).

3. Computer system (10) according to claim 2, **characterized in that** the security unit (11) is configured to lock the access data received via the reading device (13) or the data network connection (17) upon reaching the predetermined number of repeated cross-checks of the access data, and to delete the access data received via the input component (14), to receive control data dependent upon the access data, selectively, via the input component (14) or the data network connection (17), to cross-check the control data with a data set (16) stored in the firmware on a memory module (15) and, upon successful cross-checking of the control data, to unlock the locked access data, and to generate the deleted access data anew.

4. Computer system (10) according to one of claims 1 to 3, **characterized in that** the security unit (11) is configured to receive a security key of a chip card (19) via the reading device (13), and an alphanumeric character string via the input component (14), as access data, or to receive a combination, based on the two data received via the reading device (13) and the input component (14), via the data network connection (17), as access data.

5. Computer system (10) according to one of claims 1 to 4, **characterized in that** the security unit (11) is configured to permit a repeatedly successive booting of the computer system (10) after a successful cross-check of access data received via the data network connection (17), without receiving access data anew, wherein the number of boot processes is quantitatively or temporally limited.

6. Computer system (10) according to one of claims 1 to 5, **characterized in that** the data received via the data network connection (17) is encrypted, and the security unit (11) is configured to decrypt the received data.

7. Method for a computer system (10), in particular a computer system (10) according to one of claims 1 to 6, including a data network port (12), a reading device (13), and an input component (14), including the steps:
- establishing of a data network connection (17) via the data network port (12) if the computer system (10) is started,
- receiving access data, selectively, via the data network connection (17) or via the reading device (13) and the input component (14),
- cross-checking of the received access data with a data set (16) stored in a firmware on a memory module (15), and
- booting of the computer system (10) if the cross-check was successful.

8. Method according to claim 7, **characterized in that** the steps of receiving and cross-checking are repeated, in a faulty cross-check, for a predetermined number of times, and additionally the step
- reading of the predetermined number of repetitions of the steps of receiving and cross-checking, via the reading device (13), from a chip card (19), is carried out.

9. Method according to one of the claims 7 or 8, **characterized in that** the step of booting can be repeatedly successively carried out after a successful cross-check of access data received via the data network connection (17), without carrying out the steps of receipt and cross-checking anew, wherein the number of repetitions is quantitatively or temporally limited.

10. Method according to one of claims 7 to 9, **characterized in that** in the step of receiving access data, a security key is, selectively, received, via the reading device (13) from a chip card (19), and an alphanumeric character string, via the input component (14), or a combination based on the security key and the character string, via the data network connection (17), as access data.

11. Method for a computer system (10), in particular a computer system (10) according to claim 3, including a data network port (12), a reading device (13) and an input component (14), comprising the steps:
- establishing a data network connection (17) via the data network port (12) if the computer system (10) is started,
- repeated receiving of access data, selectively, via the data network connection (17), or via the reading device (13) and the input component (14), and cross-checking with a data set (16) stored in a firmware on a memory module (15) until the cross-checking was successful or a predetermined number of repetitions was reached,
- locking of the access data if the predetermined number in the step of repeated receiving and cross-checking of access data was reached, or booting of the computer system (10) if the cross-checking of the access data was successful, and
- cross-checking of control data received via the data network connection (17) or the input component (14) if the access data was locked, and unlocking of the locked access data if the cross-checking of the control data was successful.

12. Method according to claim 11, **characterized in that**, in the step of cross-checking the control data, an alphanumeric character string is received as control data.

13. Method according to one of claims 7 to 12, **characterized in that** additionally the following steps are carried out:
- encryption of data before the data is sent via the data network connection (17), and
- decryption of the encrypted data which was received via the data network connection (17).

14. Method according to one of claims 11 to 13, **characterized in that** in the step of locking the access data, the access data received via the input component (14) are additionally deleted, and, in the step of cross-checking the control data, the deleted access data are generated anew if the cross-check was successful.

## Revendications

1. Système informatique (10) avec une connexion à un réseau de données (12), un lecteur (13), un composant de saisie (14) et un moyen de sécurité (11), dans lequel le moyen de sécurité (11) est conçu pour établir une connexion de réseau de données (17) par l'intermédiaire de la connexion à un réseau de données (12) lors du démarrage du système informatique (10), pour recevoir des données d'accès au choix par l'intermédiaire de la connexion de réseau de données (17) ou par l'intermédiaire de l'lecteur (13) et le composant de saisie (14), les comparer à un jeu de données (16) enregistré dans un micrologiciel sur un module de mémoire (15) et redémarrer le système informatique (10) si la comparaison avait réussie.

2. Système informatique (10) selon la revendication 1, **caractérisé en ce que** le moyen de sécurité (11) est configuré pour répéter la réception et la comparaison des données d'accès lors d'une comparaison erronée pour un nombre prédéfini et pour lire le nombre prédéfini par l'intermédiaire de l'lecteur (13) depuis une carte à puce (19) .

3. Système informatique (10) selon la revendication 2, **caractérisé en ce que** le moyen de sécurité (11) est configuré pour, une fois le nombre prédéfini de comparaisons répétées des données d'accès atteint, bloquer les données d'accès reçues par l'intermédiaire du lecteur(13) ou de la connexion de réseau de données (17) et pour supprimer les données d'accès reçues par l'intermédiaire du composant de saisie (14), pour recevoir des données de contrôle dépendant des données d'accès au choix par l'intermédiaire du composant de saisie (14) ou de la connexion de réseau de données (17), pour comparer les données de contrôle à un jeu de données (16) enregistré dans le micrologiciel sur un module de mémoire (15) et pour débloquer, une fois la comparaison des données de contrôle avait réussie, les données d'accès bloquées et générer à nouveau les données d'accès supprimées.

4. Système informatique (10) selon l'une quelconque des revendications 1 à 3, **caractérisé en ce que** le moyen de sécurité (11) est configuré pour recevoir une clé de sécurité d'une carte à puce (19) par l'intermédiaire du lecteur (13) et une suite de caractères alphanumériques par l'intermédiaire du composant de saisie (14) en tant que données d'accès ou pour recevoir une combinaison basée sur les données, les deux reçues par l'intermédiaire du lecteur (13) et du composant de saisie (14) par l'intermédiaire de la connexion de réseau de données (17) en tant que données d'accès.

5. Système informatique (10) selon l'une quelconque des revendications 1 à 4, **caractérisé en ce que** le moyen de sécurité (11) est configuré pour consentir, après une comparaison réussie de données d'accès reçues par l'intermédiaire de la connexion de réseau de donnes (17), un démarrage consécutif à plusieurs reprises du système informatique (10) sans recevoir à nouveau des données d'accès, dans lequel le nombre des opérations de démarrage est limité sur le plan quantitatif ou temporel.

6. Système informatique (10) selon l'une quelconque des revendications 1 à 5, **caractérisé en ce que** les données reçues par l'intermédiaire de la connexion de réseau de données (17) sont cryptées et le moyen de sécurité (11) est configuré pour décrypter les données reçues.

7. Procédé pour un système informatique (10), en particulier un système informatique (10) selon l'une quelconque des revendications 1 à 6, comprenant une connexion à un réseau de données (12), un lecteur (13) et un composant de saisie (14), et comprenant les étapes suivantes :
- l'établissement d'une connexion de réseau de données (17) par l'intermédiaire de la connexion à un réseau de données (12) si le système informatique (10) soit démarré,
- la réception de données d'accès au choix par l'intermédiaire de la connexion de réseau de données (17) ou par l'intermédiaire du lecteur (13) et du composant de saisie (14),
- la comparaison des données d'accès reçues à un jeu de données (16) enregistré dans un micrologiciel sur un module de mémoire (15),
- le démarrage du système informatique (10) si la comparaison avait réussite.

8. Procédé selon la revendication 7, **caractérisé en ce que** les étapes de la réception et de la comparaison sont répétées en présence d'une comparaison erronée pour un nombre prédéfini, et qu'en supplément l'étape
- de lecture du nombre prédéfini de répétitions des étapes de la réception et de la comparaison par l'intermédiaire du lecteur (13) depuis une carte à puce (19) est exécutée.

9. Procédé selon l'une quelconque des revendications 7 ou 8, **caractérisé en ce que** l'étape du démarrage peut être exécutée après une comparaison réussie de données d'accès reçues par l'intermédiaire de la connexion de réseau de données (17), de manière consécutive à plusieurs reprises sans exécuter à nouveau les étapes de la réception et de la comparaison, dans lequel le nombre des répétitions est limité sur le plan quantitatif ou temporel.

10. Procédé selon l'une quelconque des revendications 7 à 9, **caractérisé en ce que** sont reçues, lors de l'étape de la réception de données d'accès, au choix une clé de sécurité par l'intermédiaire de l'lecteur (13) depuis une carte à puce (19) et une séquence de caractères alphanumériques par l'intermédiaire du composant de saisie (14) ou une combinaison basée sur la clé de sécurité et sur la séquence de caractères par l'intermédiaire de la connexion de réseau de données (17) en tant que données d'accès.

11. Procédé pour un système informatique (10), en particulier un système informatique (10) selon la revendication 3, comprenant une connexion à un réseau de données (12), un lecteur (13) et un composant de saisie (14), avec les étapes :
- d'établissement d'une connexion de réseau de données (17) par l'intermédiaire de la connexion à un réseau de données (12) si le système informatique (10) est démarré,
- de réception répétée de données d'accès au choix par l'intermédiaire de la connexion de réseau de données (17) ou par l'intermédiaire du lecteur (13) et du composant de saisie (14) et la comparaison à un jeu de données (16) enregistré dans un micrologiciel sur un module de mémoire (15) jusqu'à ce que la comparaison avait réussite ou qu'un nombre prédéfini de répétitions ait été atteint,
- de blocage des données d'accès si le nombre prédéfini a été atteint lors de l'étape de la réception répétée et de la comparaison de données d'accès ou de démarrage du système informatique (10) si la comparaison des données d'accès avait réussite, et
- de comparaison de données de contrôle reçues par l'intermédiaire de la connexion de réseau de données (17) ou du composant de saisie (14) si les données d'accès ont été bloquées et le déblocage des données d'accès bloquées si la comparaison des données de contrôle avait réussite.

12. Procédé selon la revendication 11, **caractérisé en ce qu'**une séquence de caractères alphanumériques est reçue en tant que données de contrôle lors de l'étape de la comparaison des données de contrôle.

13. Procédé selon l'une quelconque des revendications 7 à 12, **caractérisé en ce qu'**en supplément des étapes suivantes sont exécutées :
- cryptage des données, avant que les données ne soient envoyées par l'intermédiaire de la connexion de réseau de données (17), et
- décryptage des données cryptées, qui ont été reçues par l'intermédiaire de la connexion de réseau de données (17).

14. Procédé selon l'une quelconque des revendications 11 à 13, **caractérisé en ce qu'**en supplément les données d'accès reçues par l'intermédiaire du composant de saisie (14) sont supprimées lors de l'étape du blocage des données d'accès et les données d'accès supprimées sont générées à nouveau lors de l'étape de la comparaison des données de contrôle si la comparaison avait réussite.
